# DEMANDE DE BREVET EUROPEEN

(11) **EP 4 707 022 A1**
(43) Date de publication de la demande: **11.03.2026**
(21) Numéro de dépôt: 25200627.5
(22) Date de dépôt: 05.09.2025
(51) Int. Cl.: B60K 28/06, B60W 50/16

(54) **PROCÉDÉ D'ARRÊT D'URGENCE AUTONOME D'UN VÉHICULE ÉQUIPÉ D'UNE PÉDALE HAPTIQUE**

(30) Priorité: 09.09.2024 FR 2409555
(71) Demandeur: AMPERE s.a.s., 92100 Boulougne-Billancourt (FR)
(72) Inventeur: RONDEL, Jérémie, 78084 GUYANCOURT (FR)
(74) Mandataire: Renault Group

(57) **Abrégé**

Un aspect de l'invention concerne un procédé d'arrêt d'urgence autonome d'un véhicule, comportant :
- Une étape (101) de détection d'une incapacité d'un conducteur à conduire le véhicule (200) ;
- Une étape (102) d'alerte statique du conducteur comportant une émission avec une première intensité, d'au moins une vibration via la pédale haptique (201) du véhicule (200) ;
- En l'absence de réaction du conducteur pendant l'étape (102) d'alerte statique, une étape (103) d'activation d'une fonction d'assistance à l'arrêt d'urgence implémentée sur le véhicule (200), entraînant la mise en œuvre des étapes suivantes :
- Au moins une étape (1031, 1032) d'alerte dynamique du conducteur ;
- En l'absence de mise en œuvre d'une condition de reprise en main par le conducteur pendant l'étape (1031, 1032) d'alerte dynamique, une étape (1033) de ralentissement du véhicule (200) jusqu'à son arrêt.

## Description

### DOMAINE TECHNIQUE DE L'INVENTION

Le domaine technique de l'invention est celui des fonctions de sécurité dans les véhicules, et plus particulièrement celui des fonctions d'arrêt d'urgence dans les véhicules.

La présente invention concerne un procédé d'arrêt d'urgence d'un véhicule et en particulier un procédé d'arrêt d'urgence autonome d'un véhicule équipé d'au moins une pédale haptique. L'invention concerne également un véhicule et un produit-programme d'ordinateur pour la mise en œuvre du procédé.

### ARRIERE-PLAN TECHNOLOGIQUE DE L'INVENTION

La fonction d'assistance à l'arrêt d'urgence ou Risk Mitigation Function (RMF) en anglais est une prestation permettant au conducteur en cas de relâchement des mains sur le volant, somnolence ou distraction pendant une certaine durée, d'arrêter le véhicule automatiquement dans sa voie après un certain nombre d'alertes et sur une durée qui peut s'étaler sur plus de 30 secondes.

Cette fonction a notamment pour but de mettre le véhicule en sécurité si le conducteur rencontre par exemple, un malaise.

Aujourd'hui, la détection de la somnolence ou distraction du conducteur est de plus en plus réalisée par traitement d'images obtenues via une caméra pointée sur le conducteur.

Le problème d'une telle détection est qu'elle génère des cas de faux positifs qui peuvent entraîner l'activation de la fonction d'assistance à l'arrêt d'urgence et donc le déclenchement d'alertes, alors même que le conducteur est apte à conduire.

Ceci a souvent pour conséquence une désactivation définitive de la fonction par le conducteur qui n'est alors plus protégé s'il rencontre un malaise.

Il existe donc un besoin d'un procédé permettant un arrêt d'urgence autonome d'un véhicule quand son conducteur est incapable de conduire, qui limite la génération de fausses alertes.

### RESUME DE L'INVENTION

L'invention offre une solution aux problèmes évoqués précédemment, en permettant l'arrêt d'urgence autonome du véhicule, sans générer de fausses alertes à destination du conducteur.

Un premier aspect de l'invention concerne un procédé d'arrêt d'urgence autonome d'un véhicule équipé d'au moins une pédale haptique, comportant :
- Une étape de détection d'une incapacité d'un conducteur à conduire le véhicule ;
- Une étape d'alerte statique du conducteur comportant une émission avec une première intensité, d'au moins une vibration via la pédale haptique du véhicule ;
- En l'absence de réaction du conducteur pendant l'étape d'alerte statique, une étape d'activation d'une fonction d'assistance à l'arrêt d'urgence implémentée sur le véhicule, entraînant la mise en œuvre des étapes suivantes :
   - Au moins une étape d'alerte dynamique du conducteur ;
   - En l'absence de mise en œuvre d'une condition de reprise en main par le conducteur pendant l'étape d'alerte dynamique, une étape de ralentissement du véhicule jusqu'à son arrêt.

Grâce à l'invention, une fois que le conducteur a été détecté comme inapte à conduire, des vibrations sont émises via une pédale haptique du véhicule, par exemple la pédale d'accélérateur, pour faire réagir le conducteur. Si le conducteur réagit, par exemple en relâchant ou en appuyant plus fort sur la pédale, la détection est considérée comme erronée et la fonction d'assistance à l'arrêt d'urgence n'est pas activée, ce qui permet de robustifier la détection et d'éviter la génération d'alertes intempestives à destination du conducteur. Par ailleurs, la robustification de la détection est réalisée à l'aide d'un capteur déjà présent dans la majorité des véhicules et classiquement utilisé par exemple pour signaler au conducteur qu'il faut qu'il lève le pied de la pédale d'accélérateur pour ralentir et économiser du carburant.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Selon une variante de réalisation, l'étape d'alerte dynamique et/ou l'étape de ralentissement comporte une émission d'au moins une vibration via la pédale haptique du véhicule.

Ainsi, la pédale haptique est également utilisée pour alerter plus fortement le conducteur pendant l'arrêt d'urgence autonome du véhicule en envoyant des vibrations avec une intensité plus ou moins élevée lors d'une ou plusieurs étapes de l'arrêt d'urgence autonome.

Selon une sous-variante de réalisation de la variante de réalisation précédente, le procédé selon l'invention comporte une première étape d'alerte dynamique et une deuxième étape d'alerte dynamique, la première étape d'alerte dynamique comportant une émission avec une deuxième intensité, d'au moins une vibration via la pédale haptique du véhicule et la deuxième étape d'alerte dynamique comportant une émission avec une troisième intensité, d'au moins une vibration via la pédale haptique du véhicule, la troisième intensité étant supérieure à la deuxième intensité.

Selon une alternative de réalisation de la sous-variante de réalisation précédente, la première intensité est égale à la deuxième intensité.

Selon une alternative de réalisation de la sous-variante de réalisation précédente compatible avec l'alternative de réalisation précédente, l'étape de ralentissement comporte une émission avec une quatrième intensité, d'au moins une vibration via la pédale haptique du véhicule, la quatrième intensité étant supérieure à la troisième intensité.

Ainsi, l'intensité avec laquelle sont émises les vibrations par la pédale haptique augmente crescendo au fil des étapes mises en œuvre par la fonction d'assistance à l'arrêt d'urgence pour maximiser les chances d'une reprise en main par le conducteur avant l'arrêt du véhicule.

Selon une variante de réalisation compatible avec la variante de réalisation précédente, la fonction d'assistance à l'arrêt d'urgence met en œuvre une étape de maintien à l'arrêt du véhicule.

Selon une variante de réalisation compatible avec les variantes de réalisation précédentes, un signal sonore et/ou visuel est émis durant l'étape d'alerte statique et/ou l'étape d'alerte dynamique.

Selon une variante de réalisation compatible avec les variantes de réalisation précédentes, au moins une fonction de contrôle de la vitesse ou de la trajectoire du véhicule est mise en œuvre, et/ou les freins sont activés, durant l'étape d'alerte dynamique.

Un deuxième aspect de l'invention concerne un véhicule comportant des moyens pour mettre en œuvre le procédé selon l'invention.

Un troisième aspect de l'invention concerne un produit programme d'ordinateur comprenant des instructions qui, lorsque le programme est exécuté par un ordinateur, conduisent celui-ci à mettre en œuvre les étapes du procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon l'invention.
- La figure 2 montre une représentation schématique d'un véhicule sur lequel est appliqué le procédé selon l'invention, en fonction du temps.

### DESCRIPTION DETAILLEE

Sauf précision contraire, un même élément apparaissant sur des figures différentes présente une référence unique.

L'invention concerne un procédé permettant l'arrêt d'urgence d'un véhicule de manière autonome, c'est-à-dire sans intervention d'un conducteur du véhicule.

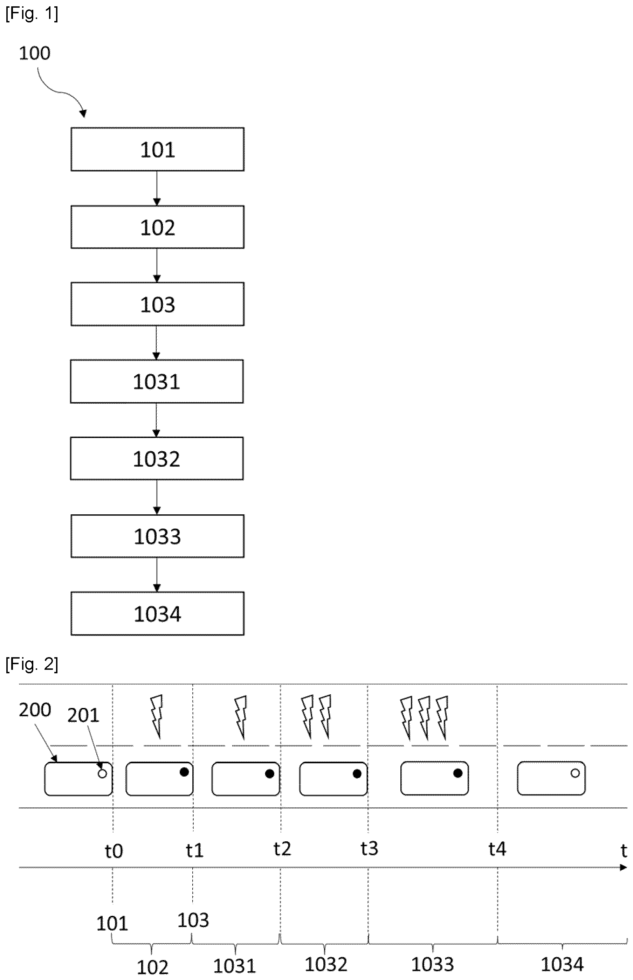

L'enchaînement des étapes du procédé 100 est illustré sur la figure 1 et leurs effets sur le véhicule 200 en fonction du temps sont illustrés sur la figure 2.

Le véhicule 200 est équipé, c'est-à-dire comporte, au moins une pédale haptique 201.

La pédale haptique 201 est par exemple la pédale d'accélérateur.

Sur la figure 2, la pédale haptique 201 est représentée par un rond vide si elle n'émet aucune vibration et par un rond plein si elle est en train d'émettre des vibrations. L'intensité avec laquelle sont émises les vibrations par la pédale haptique 201 est illustrée schématiquement par un ou plusieurs éclairs au-dessus du véhicule 200 : plus le nombre d'éclairs est élevé et plus l'intensité d'émission des vibrations est élevée.

Une première étape 101 du procédé 100 consiste à détecter une incapacité du conducteur à conduire le véhicule 200, par exemple suite à un malaise du conducteur.

Une telle incapacité est par exemple détectée en cas de relâchement des mains sur le volant, ou encore en cas de détection d'une somnolence ou distraction du conducteur pendant une certaine durée. La détection d'une somnolence ou d'une distraction du conducteur est par exemple réalisée à l'aide d'une caméra et d'une intelligence artificielle entraînée pour identifier certains signes chez le conducteur, par exemple les yeux fermés, à partir d'images acquises par la caméra.

Sur la figure 2, la détection de l'incapacité du conducteur est réalisée à l'instant t0.

Une deuxième étape 102 du procédé 100 consiste à émettre une alerte dite statique à destination du conducteur.

On entend par « alerte statique », une alerte qui, par opposition à une alerte dynamique, n'a pas d'effet sur la vitesse et/ou la trajectoire du véhicule.

La deuxième étape 102 comporte une émission d'au moins une vibration via la pédale haptique 201 du véhicule 200, les vibrations étant émises avec une première intensité.

Sur la figure 2, la deuxième étape 102 est mise en œuvre entre les instants t0 et t1 et la première intensité est illustrée par un éclair et peut donc être qualifiée de faible.

La deuxième étape 102 peut également comporter l'émission d'un signal sonore et/ou d'un signal visuel à destination du conducteur.

Si le conducteur ne réagit pas pendant la deuxième étape 102, par exemple si le conducteur ne remet pas ses mains sur le volant après la détection d'un relâchement des mains sur le volant ou si le conducteur n'est pas détecté comme étant suffisamment réveillé ou alerte après la détection d'une somnolence ou d'une distraction, une troisième étape 103 du procédé 100 est mise en œuvre.

La troisième étape 103 du procédé 100 consiste à activer une fonction d'assistance à l'arrêt d'urgence implémentée sur le véhicule 200.

Une telle activation est réalisée automatiquement.

Sur la figure 2, la troisième étape 103 est mise en œuvre à l'instant t1.

L'activation de la fonction d'assistance à l'arrêt d'urgence entraîne la mise en œuvre des étapes suivantes du procédé 100.

Au moins une étape 1031, 1032 d'émission d'une alerte dite dynamique à destination du conducteur est mise en œuvre suite à l'activation de la fonction d'assistance à l'arrêt d'urgence.

L'émission d'une alerte dynamique consiste par exemple à mettre en œuvre au moins une fonction de contrôle de la vitesse ou de la trajectoire du véhicule 200 et/ou à activer les freins.

La fonction de contrôle de la vitesse est par exemple une fonction de régulation de vitesse.

La fonction de contrôle de la trajectoire est par exemple une fonction d'assistance au suivi de voie.

Un signal sonore et/ou visuel peut également être émis pendant l'étape 1031, 1032 d'alerte dynamique.

L'émission d'un signal visuel consiste par exemple en l'affichage d'un message sur un écran du véhicule 200, le message étant par exemple « Arrêt d'urgence Reprenez contrôle ».

Selon une alternative de réalisation, une première étape 1031 d'alerte dynamique et une deuxième étape 1032 d'alerte dynamique sont mises en œuvre suite à l'activation de la fonction d'assistance à l'arrêt d'urgence.

La première étape 1031 d'alerte dynamique consiste par exemple à mettre en œuvre la fonction de régulation de vitesse et la fonction d'assistance au suivi de voie, et la deuxième étape 1032 d'alerte dynamique consiste par exemple à mettre en œuvre la fonction de régulation de vitesse, la fonction d'assistance au suivi de voie et à activer les freins sous forme d'à-coups ou jerks en anglais.

Sur la figure 2, la première étape 1031 est mise en œuvre entre les instants t1 et t2, et la deuxième étape 1032 est mise en œuvre entre les instants t2 et t3.

Selon un mode de réalisation, la première étape 1031 d'alerte dynamique comporte une émission d'au moins une vibration via la pédale haptique 201 du véhicule 200, les vibrations étant émises avec une deuxième intensité et la deuxième étape 1032 d'alerte dynamique comporte une émission d'au moins une vibration via la pédale haptique 201 du véhicule 200, les vibrations étant émises avec une troisième intensité.

La troisième intensité est par exemple supérieure à la deuxième intensité et la deuxième intensité est par exemple égale à la première intensité.

Sur la figure 2, la deuxième intensité est illustrée par un éclair et peut donc être qualifiée de faible et la troisième intensité est illustrée par deux éclairs et peut donc être qualifiée de moyenne.

Si le conducteur ne met pas en œuvre une condition de reprise en main pendant l'étape 1031, 1032 d'alerte dynamique, une étape 1033 de ralentissement du véhicule 200 est réalisée.

Une condition de reprise en main est par exemple une variation de position de la pédale de frein et/ou de la pédale d'accélération, et/ou une action de couple sur le volant, et/ou la détection des mains sur le volant et/ou l'activation d'un bouton d'annulation.

L'étape 1033 de ralentissement consiste à ralentir le véhicule 200 jusqu'à l'arrêt du véhicule 200, en appliquant une consigne de décélération au véhicule 200.

La consigne de décélération est par exemple comprise entre 0 et 1 m/s².

Sur la figure 2, l'étape 1033 de ralentissement est mise en œuvre entre les instants t3 et t4 et le véhicule 200 passe d'une vitesse non nulle à une vitesse nulle.

Selon un mode de réalisation, l'étape 1033 de ralentissement comporte une émission d'au moins une vibration via la pédale haptique 201 du véhicule 200, les vibrations étant émises avec une quatrième intensité.

La quatrième intensité est par exemple supérieure à la troisième intensité.

Sur la figure 2, la quatrième intensité est illustrée par trois éclairs et peut donc être qualifiée d'élevée.

Une étape 1034 de maintien à l'arrêt du véhicule 200 est réalisée une fois le véhicule 200 arrêté.

Un signal sonore et/ou visuel peut également être émis pendant l'étape 1024 de maintien à l'arrêt.

L'émission d'un signal visuel consiste par exemple en l'affichage d'un message sur un écran du véhicule 200, le message étant par exemple « Arrêt d'urgence effectué ».

Sur la figure 2, l'étape 1034 de maintien à l'arrêt est réalisée après l'instant t4.

## Revendications

1. Procédé (100) d'arrêt d'urgence autonome d'un véhicule (200) équipé d'au moins une pédale haptique (201), comportant :
- Une étape (101) de détection d'une incapacité d'un conducteur à conduire le véhicule (200) ;
- Une étape (102) d'alerte statique du conducteur comportant une émission avec une première intensité, d'au moins une vibration via la pédale haptique (201) du véhicule (200) ;
- En l'absence de réaction du conducteur pendant l'étape (102) d'alerte statique, une étape (103) d'activation d'une fonction d'assistance à l'arrêt d'urgence implémentée sur le véhicule (200), entraînant la mise en œuvre des étapes suivantes :
∘ Au moins une étape (1031, 1032) d'alerte dynamique du conducteur ;
∘ En l'absence de mise en œuvre d'une condition de reprise en main par le conducteur pendant l'étape (1031, 1032) d'alerte dynamique, une étape (1033) de ralentissement du véhicule (200) jusqu'à son arrêt.

2. Procédé (100) selon la revendication précédente, dans lequel l'étape (1031, 1032) d'alerte dynamique et/ou l'étape (1033) de ralentissement comporte une émission d'au moins une vibration via la pédale haptique (201) du véhicule (200).

3. Procédé (100) selon la revendication précédente, comportant une première étape (1031) d'alerte dynamique et une deuxième étape (1032) d'alerte dynamique, la première étape (1031) d'alerte dynamique comportant une émission avec une deuxième intensité, d'au moins une vibration via la pédale haptique (201) du véhicule (200) et la deuxième étape (1032) d'alerte dynamique comportant une émission avec une troisième intensité, d'au moins une vibration via la pédale haptique (201) du véhicule (200), la troisième intensité étant supérieure à la deuxième intensité.

4. Procédé (100) selon la revendication précédente, selon lequel la première intensité est égale à la deuxième intensité.

5. Procédé (100) selon l'une quelconque des revendications 3 ou 4, dans lequel l'étape (1033) de ralentissement comporte une émission avec une quatrième intensité, d'au moins une vibration via la pédale haptique (201) du véhicule (200), la quatrième intensité étant supérieure à la troisième intensité.

6. Procédé (100) selon l'une quelconque des revendications précédentes, dans lequel la fonction d'assistance à l'arrêt d'urgence met en œuvre une étape (1034) de maintien à l'arrêt du véhicule (200).

7. Procédé (100) selon l'une quelconque des revendications précédentes, dans lequel un signal sonore et/ou visuel est émis durant l'étape (102) d'alerte statique et/ou l'étape (1031, 1032) d'alerte dynamique.

8. Procédé (100) selon l'une quelconque des revendications précédentes, dans lequel au moins une fonction de contrôle de la vitesse ou de la trajectoire du véhicule est mise en œuvre, et/ou les freins sont activés, durant l'étape (1031, 1032) d'alerte dynamique.

9. Véhicule comportant des moyens pour mettre en œuvre le procédé (100) selon l'une quelconque des revendications précédentes.

10. Produit programme d'ordinateur comprenant des instructions qui, lorsque le programme est exécuté par un ordinateur, conduisent celui-ci à mettre en œuvre les étapes du procédé (100) selon l'une quelconque des revendications 1 à 8.
